# EUROPEAN PATENT SPECIFICATION

(11) **EP 3 112 116 B1**
(45) Date of publication and mention of the grant of the patent: **01.08.2018**
(21) Application number: 16177404.7
(22) Date of filing: 01.07.2016
(51) Int. Cl.: B29C 33/50, B29D 99/00

(54) **METHODS OF MANUFACTURING PANELS OF COMPOSITE MATERIAL REINFORCED WITH CLOSED-SECTION STRINGERS**
VERFAHREN ZUR HERSTELLUNG VON PLATTEN AUS MIT GESCHLOSSENEN HOLMEN VERSTÄRKTEM VERBUNDSTOFFMATERIAL
PROCÉDÉS DE FABRICATION DE PANNEAUX DE MATÉRIAU COMPOSITE RENFORCÉ AVEC DES TRAVERSES À SECTION FERMÉE

(30) Priority: 03.07.2015 IT UB20151973
(43) Date of publication of application: 04.01.2017
(73) Proprietor: Leonardo S.p.A., 00195 Roma (IT)
(72) Inventor: TOTARO, Giuseppe, 71036 Lucera (Foggia) (IT); IAGULLI, Gianni, 71016 San Severo (Foggia) (IT); AVAGLIANO, Luigi, 84081 Baronissi (Salerno) (IT)
(74) Representative: Fioravanti, Corrado

(56) References cited:
- EP-A2- 2 133 263
- EP-A2- 2 292 415
- WO-A1-2015/063657
- WO-A2-2010/125001
- FR-A1- 2 760 398
- US-A1- 2008 029 644

## Description

### Technical field

This invention pertains to the field of aeronautic constructions and refers, in particular, to a method for manufacturing panels of composite material reinforced with closed-section stringers. These types of stiffened panels may be used for constructing wings, tail stabilizers or the fuselage of an aircraft.

### Prior Art

A first known process for manufacturing panels reinforced with hollow stringers provides for the co-curing of the stringers to the panel on a so-called "IML" tool (*inner mold line*), which reproduces the contour of the inner surface of the panel and of the stringers. The process uses pressurizable and expandable tubular bags of nylon film or hollow rubber elements (*bladders*) placed in the cavities of the stringer. An example of this technology is given in US 2008/0029644 A1.

The weak points of the above method are the following.
- The cost of the IML tool is much higher since it must feature all the seats for the stringers machined with precision. The curing mold must be made of INVAR or composite material since they are the only materials that have a very low thermal expansion coefficient close to that of the component to be made in composite material. This prevents delaminations and / or geometric distortions that otherwise would be obtained on the part. Furthermore, for manufacturing a single-piece fuselage barrel, the cost is further increased by the need to have a series of radially retractable sectors in order to allow the extraction of the part from the mold (tool).
- The IML tool remains engaged for very long times, in particular to make "*fit up*" measurements of the stringers in their seats, and for loading of the individual stringers. This results in production flow problems which, to meet high rates, requires more tool units with resulting high non-recurring costs.
- There are problems with the quality of finished parts due to the fact that the IML tool has seats suitable for accommodating the stringer. An imperfect coupling of the fresh stringer (for manufacturing tolerances) with the seat of the tool causes defects, in particular wrinkles, in the final component. This necessitates repeated inspections, long NDI controls, MRR management, with high risk of waste.
- There are the high costs of the tubular bags or the hollow expandable rubber elements ("*bladders*") placed in the cavities of the stringers.

A second known process for manufacturing stiffened panels with hollow stingers provides for the *co-bonding* of the pre-cured stringers (which are already polymerized in advance) to the fresh panel on an OML (*outer mold line*) tool which reproduces the aerodynamic contour of the outside surface of the panel. Expandable tubular bags are used in the cavities of the stringers. The tubular bags, in addition to the high cost, are not very reliable because some of them are torn in the process of pressurization, compromising the quality of the part. The weak points of this method are:
- There are high recurring manufacturing costs. The manufacture of the pre-cured stringers requires, additionally in comparison with the co-curing process, the production of many curing bags, dedicated curing cycles for the stringers, the dismantling phase of the stringers, a possible trimming in the case where the stringers were not manufactured to net trim, NDI for the stringers before joining them to the panel with a structural adhesive.
- It takes many tools for the polymerization of the stringers with the resulting increase in non-recurring costs.
- Increased cost and production flow to make the "disposable" expandable tubular bags in each cavity of the stringers, with the resulting complication of the final cure vacuum bag which is joined and sealed to the ends of the expandable tubular bags.

Given the two methods discussed above, it emerges that the co-curing method offers a significant cost advantage compared to the *co-bonding* method, mainly for the recurring and non-recurring manufacturing costs. On the other hand, the use of an OML tool has a greater qualitative advantage compared to the IML due to the lower number of typical defects present in the component and therefore for the cost savings connected with structural characterization campaigns.

The possibility of manufacturing a stiffened co-cured panel with hollow stringers, with expandable tubular bags, on the OML tool, using a counter-mold to be positioned on the stringers, or a very rigid caul plate, has been evaluated. The counter-mold would be necessary to ensure, after the polymerization step, the precise geometric form of the stringer itself. Such a rigid counter-mold brings with it a number of disadvantages and risks for the actual feasibility. Indeed, in addition to the complexity of the operation and handling of the many counter-molds dedicated to the stringers, there are qualitative problems connected with the imprints that are left on the fresh panel or problems in general linked to the inaccurate coupling with the stringers, which translate into the generation of non-acceptable defects in the part: porosity, resin excesses and fiber deviations.

WO 2015/063657 A1 discloses a method of manufacturing reinforced panels as defined in the preamble of claim 1.

### Summary of the invention

This method aims to combine the advantages resulting from the two aforementioned processes, reducing the recurrent and non-recurrent production costs, and improving the overall quality of the product, in particular with reference to the results obtainable with the current co-cured processes on an IML tool.

The above and other purposes and advantages, which will be better clarified hereinafter, are achieved by a method as defined in the appended claims.

In summary, a more efficient manufacturing process is proposed through the use of solid rubber inserts for the co-curing of panels reinforced with hollow stringers in composite material. The conventional tubular bags or *bladders* are replaced by solid rubber inserts which, during the co-curing process, ensure an effective compaction and consolidation of the stringer and the skin, giving the cavity the desired geometry. During the polymerization process, the insert undergoes a controlled thermal expansion which reacts to the compression action resulting from the external pressure applied by the autoclave and by the vacuum applied to the curing bag. In this condition, the solid laminate (which constitutes the string) interposed between the rubber insert and the bag material receives the desired level of compaction required for the proper polymerization of the part. After the polymerization step, the insert undergoes a thermal shrinkage which makes its extraction from the cavity of the stringer very simple, even in the presence of curvature and ramp or variations in the thickness of the panel.

This manufacturing method allows the cost advantages resulting from the co-curing process to be exploited and to achieve, with curing on the OML tool, qualitative benefits on the final component.

### Brief description of the drawings

Figure 1 is a perspective view of a stiffened panel that may be manufactured in accordance with the present method;
figures 2 to 6 are cross-sectional schematic views illustrating a sequence of the assembly phases of the panel in uncured condition;
figures 7 to 10 illustrate schematically in cross section a series of possible shapes that may be conferred to the cavities defined by the stringers integrated in the panel;
figure 11 is a perspective view illustrating a final phase of the method;
figure 12 is a cross-sectional view of part of a reinforced panel;
figure 13 is a cross-sectional view of part of a reinforced panel according to an alternative embodiment of the method;
figures 14 to 19 are perspective views of components of an apparatus which may be used for implementation of the method.

### Detailed description

This method was developed based on the observation that, in general, stiffened panels with closed-section hollow stringers (for example with semicircular, omega, etc. cross-sections) represent an optimal solution for aeronautical constructions in terms of weight compared to other configurations of stiffened panels with open-section stringers, for example, with a T-shape, a double T (or H-shape), a J-shape, a C-shape, etc.

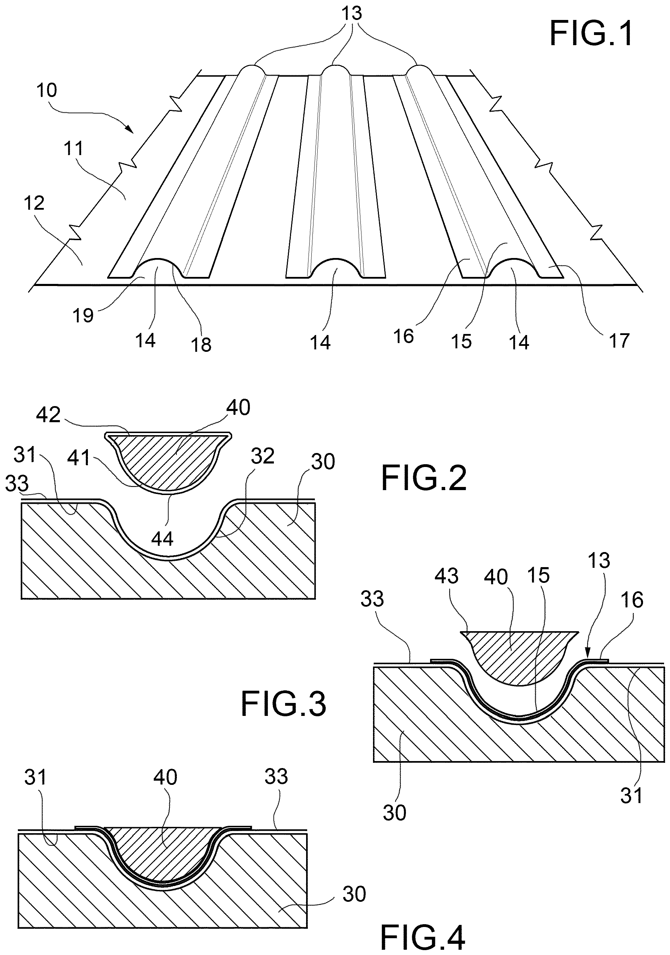

In Figure 1 an exemplary reinforced panel of composite material which may be manufactured with this method is indicated as a whole with 10. The reinforced panel 10 comprises a skin panel 11 having a face 12 on which a plurality of stringers 13, elongated in a direction defined here as "longitudinal", are applied rigidly and integrally.

In the example illustrated herein, the stringers 13 are substantially straight and parallel to each other and lying in a same plane. This method is equally applicable with non-straight, non-parallel stringers not lying in a single geometric plane.

The stringers 13 determine, together with face 12 of the skin panel 11, a series of respective longitudinally elongated closed-section cavities 14. In this context, terms and expressions indicating direction and orientation such as "longitudinal" and "transversal" [or "cross"] are to be construed as referring to a longitudinal direction in which the stringers 13 extend.

The stringers 13 are of composite materials with fiber-reinforced polymerizable thermosetting resin. In the example of Figure 1, the cavities 14 have a cross section defined here as a Ω shape, or with the shape of a circular segment with a base. The stringers 13 each have a concave portion 15 with two opposite lateral flanges 16, 17.

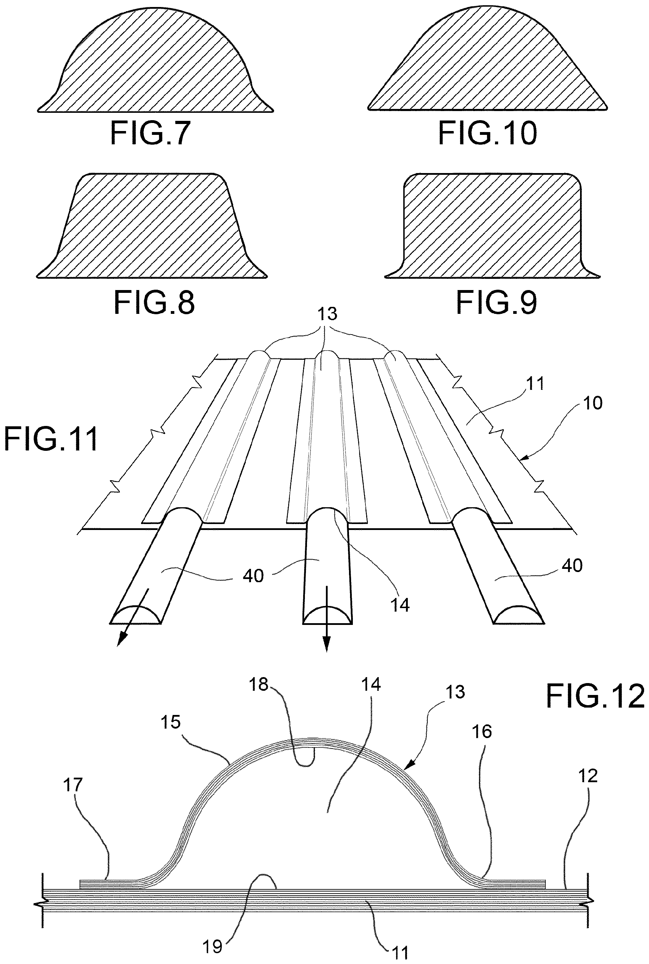

In the example shown in Figures 1-7 and 10-12, the concave portion 15 is arched. In other embodiments, the concave portion 15 may have a cross section with a broken line shape, so as to define with the face 12 a cavity with a substantially trapezoidal-shaped cross section (Figure 8).

Alternatively, the cavities 14 may have a substantially rectangular cross section (Figure 9). In this embodiment, the stringer (not shown) may have the shape known per se in the field by the expression "*hollow hat*", where the concave portion 15 is substantially C-shaped, with a flat side that joins two parallel opposite sides from which extend, in opposite directions, two lateral flanges 16, 17. The particular geometric shape of the concave portion and, more generally, of the stringers, is not to be considered as limiting.

Each cavity 14 has a concave wall 18 and a flat wall 19, presented respectively from the side of the stringer 13 and from the face 12 of the skin panel 11.

The uncured (non-polymerized) individual stringers 13 may be prepared separately, according to means known per se, for example on male tools (not shown), and then may be applied in a female handling tool 30 (figure 2).

The tool 30 has a surface 31, in this example substantially flat, in which at least one concave groove 32 is obtained, having the shape that it is desired to confer to the stringer, in particular to its surface which, in conditions of use, will be part of the internal surface (IML) of the reinforced panel. The groove 32 may be straight, or not, based on the shape of the stringer to be produced.

According to one possible embodiment of the method, the polymerizable stringers 13 may be laminated, i.e., formed, in the groove 32 of the female tool 30.

According to further embodiments, alternative to the one shown, the female handling tool 30 may feature a plurality of concave grooves 32, formed on surface 31. In the case of three or more grooves 32 formed in a same female tool 30, the grooves may be equally spaced transversally.

The female tool 30 is preferably lined, at least on the groove/s 32 and on the parts of the flat surface 32 adjacent to the grooves 32, with contact materials schematically indicated with 33, preferably in the form of FEP tapes or film or Teflon adhesives.

An insert 40 of elastomeric material is elongated in a longitudinal direction and has a solid cross section, i.e. not hollow and not tubular. The insert 40 has an external contour with a convex surface 41 and a substantially flat surface 42. The expression "substantially flat", here referring to the surface 42, is to indicate that said surface may be flat, slightly convex, or slightly concave. The elongated insert 40 serves to accurately determine the shape of the elongated cavity 14 for one of the stringers in the finished reinforced panel. Therefore, the elongated insert 40 and the cavity 14 have congruent shapes.

The convex surface 41 of the elongated insert has a contour corresponding to the contour of the concave groove 32. In this example, the convex surface 41 is curved, like the groove 32. In other embodiments, not shown, the elongated insert 40 may have a cross section for example trapezoidal, or rectangular, or in each instance corresponding to the cross section of the groove 32.

The elongated insert 40 is preferably extruded and has a constant cross section, to facilitate its extraction in the longitudinal direction from the cavity following a polymerization or co-curing phase of the reinforced panel. According to this embodiment, consequently the cavities 14 also have constant cross sections along their length.

Alternatively, stringers may be made with variable-section cavities, but without undercuts in order not to make their extraction difficult. According to this embodiment, the removable inserts may be manufactured by casting into a closed mold, with costs greater than with extrusion.

Experimental tests carried out by the Applicant have shown that optimum results are obtainable by making elongated inserts 40 of silicone rubber. Particularly advantageous results were obtained by selecting a rubber hardness of about 70 shore.

The rubber material of the inserts has transverse thermal expansion and shrinkage coefficients greater than the thermal expansion and shrinkage coefficients of the thermosetting composite material constituting the skin panel 11 and the stringers 13.

The insert 40, after the extrusion phase, may undergo a curing treatment at approximately 180°C (for about 24 hours) that stabilizes its physiochemical properties and which prevents the possibility of releasing contaminating substances for the composite material.

According to an embodiment, the insert may be advantageously coated, before its use, with a preferably Teflon-based adhesive tape 44, for example a commercially available tape such as Permacel P-422, which reduces its friction coefficient during the extraction of the polymerized component and facilitates its detachment downstream from its cure in the autoclave.

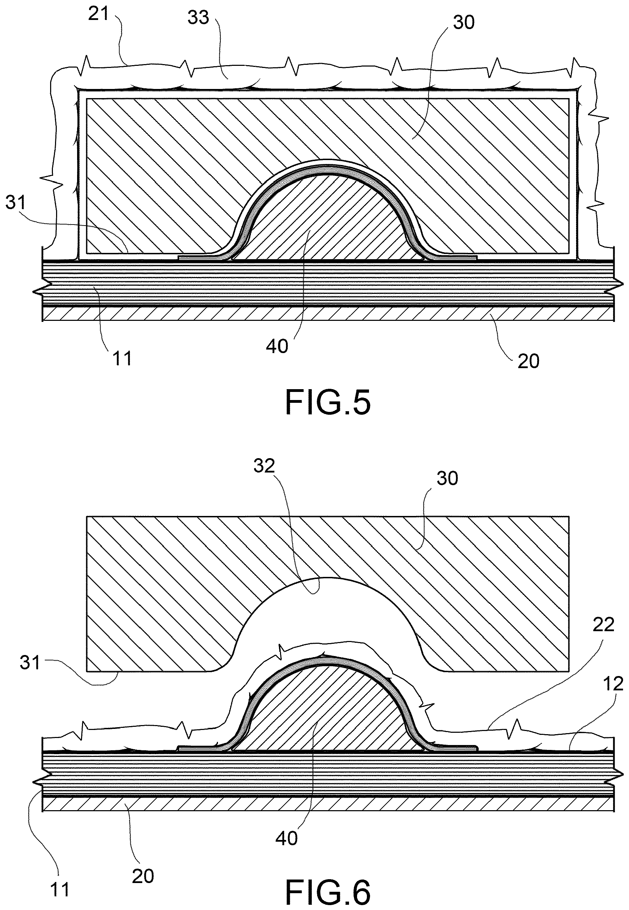

An uncured layer or skin panel 11 of fiber-reinforced polymerizable thermosetting material ("composite material" or "*prepreg*") is positioned on a bottom plate 20 (Figure 6) of a rigid mold or tool, suitable for shaping the part.

In this example, the plate 20 of the forming mold is flat. The choice to make a flat tool, as well as the adoption of a shape with an omega cross section, constitute choices which may be preferential in certain application conditions but certainly not imperative for the purposes of the implementation of the invention. In particular, this may be implemented with a cylindrical or arched forming tool, to make an arched or circular structural element, for example a fuselage panel or a fuselage barrel.

According to a embodiment (Figure 3), a stringer 13 may be prepared on the female tool 30, by laminating fiber-reinforced polymerizable thermosetting material ("composite material" or "prepreg") which is placed in the groove 32, copying its shape, and on the area of the flat surface 31 adjacent to the groove 32. In the case of a tool with multiple grooves 32, a plurality of stringers 13 are laminated transversally spaced from one another. The female tool 30 serves advantageously also for the assembly of the reinforced panel to be co-cured.

Subsequently (Figure 4), a respective insert 40 is placed in the concave portion 15 of each stringer 13.The convex surface 41 of the insert is turned toward the groove 32, while the substantially flat surface 42 of the insert is approximately flush with the flanges 16, 17 of the stringer.

Then (Figure 5), the female tool 30 with the insert(s) 40 and the stringer(s) 13 may be turned over and placed over the skin panel 11, causing the flanges 16, 17 to be supported directly against the upper surface 12 of the skin panel.

Preferably, the stringers 13 are compacted with a compacting vacuum bag 21 which may be applied over the female tool 30 and over the skin panel 11.

The female tool 30 may then be removed (Figure 6). In this way, a panel 10 of composite material with skin and stringers to be co-cured is assembled.

Then a curing vacuum bag 22 is applied on the assembled panel 10 and a polymerization or co-curing phase of the composite material constituting the skin panels and stringers is carried out in an autoclave.

The polymerization step takes place in an autoclave using a programmed cycle of temperature and pressure application indicated by the supplier of the particular composite material used. For example, for a typical composite material, a pressure of 6 bars will be applied in an autoclave, causing the temperature to rise to 180°C with a rate of approximately 1°- 3°C/min.; it will remain at 180°C for about 2-3 hours and will be cooled to 60°C before releasing the pressure.

During the polymerization process, the curing bag 22, under the action of the vacuum applied to it and of the pressure of the autoclave, compacts the stringers and the skin panel. The insert 40 undergoes a controlled thermal expansion and exerts a pressure against the inner walls of the cavity 14 in which it is housed, which reacts to the compression action resulting from the external pressure applied by the autoclave and by the vacuum applied to the curing bag 22. The stringers and the part of the skin panel in contact with the insert thus receive the desired level of compaction needed for the proper polymerization of the part. The desired shape and dimensions are conferred accurately to the cavity 14.

With the polymerization phase completed, each insert 40 is cooled and undergoes a traverse thermal shrinkage of a greater magnitude than the thermal shrinkage undergone by the cured materials. Therefore, each insert 40 may be easily removed from the panel, extracting it longitudinally from the respective cavity 14 (Figure 11). The effect of thermal shrinkage after the polymerization phase favors the extraction of the insert even in the presence of minor undercuts, curvatures, ramps or variations in thickness of the panel. The insert may be reused many times.

This method is usable in all applications where the use of co-cured reinforced panels in composite material with closed-section stringers is provided for, for example, stiffened wing panels, drift or stabilizer stiffened panels, stiffened fuselage panels, etc.

Compared to a conventional method of co-bonding with pre-cured stringers, this method reduces the production flow, the number of autoclave cycles, the auxiliary materials used (for lining the bladders composing the tubular bags) with a reduced environmental impact, and is much more convenient in terms of costs.

Experimental testing performed by the Applicant has demonstrated that the solid rubber inserts did not undergo any variations in dimension and stiffness after 16 curing cycles. Their durability is greater than that of conventional pressurizable hollow bladders. The per meter cost of the extractable inserts is about 10 times lower compared to the cost of the conventional bladders. Another saving is linked to the cost of the coating materials: the bladders require a double coating (ventilation tubing and separator), while the inserts 40 require at most a single coating, for example, the abovementioned *Permacel* P422. Also eliminated is the conventional check of the vacuum tightness of the bladders: in order to use bladders, the integrity of the vacuum tightness must be checked after every curing cycle to prevent leaks in the final cure bag. This operation is not required for the solid rubber inserts, with a resulting savings in cost and production flow. Finally, unlike the bladders, the inserts 40 do not need to be pressurized.

Compared to similar stiffened panels to be made with the co-bonding method with pre-cured stringers, the cost savings achievable by this method is related to the following steps which are not necessary:
- preparation of curing bags for the stringers;
- cost of auxiliary materials for the curing bag;
- curing cycle for the stringers (energy and man-hours);
- dismantling of the vacuum bag (man-hours);
- potential trimming (man-hours, energy, tool consumption, machine use);
- NDI before bonding.

As may be appreciated, the insert 40 ensures the formation of an internal cavity having the shape and dimensions desired. Another considerable advantage of this method is the possibility of producing hollow stringers without the triangular-section fillers that have traditionally been placed on the edges of the bladder or of the tubular bag. In fact it is possible to integrate the protuberances 43 of the extractable inserts at an acute angle in the edge area in which the fillers are usually installed. In conventional structures these are made of composite material and adhesive and become an integral part of the structure. According to this method, the closed-section stringer may therefore be made, eliminating the separate conventional fillers.

The inserts 40 are made of resilient material. Preferably, the inserts 20 are made of a pre-cured silicone rubber.

One example of materials which may be chosen as suitable for the extractable inserts are polysiloxanes (polymerized siloxanes), preferably of the category called HTC (*High Temperature Vulcanizing*), which vulcanize at high temperatures not achievable during the curing processes of the composite materials (carbo resin). Experimental tests done by the Applicant have demonstrated that excellent results may be obtained with the use of inserts made with a silicone rubber of the Polyvinyl-methyl-siloxane (VMQ) type belonging to the Q group of siloxanes in accordance with ISO 1629 (derived from ASTM 1418-79). More specifically, the elastomer used may have the following physiochemical and mechanical properties considered as optimal: specific weight 1.200 + 0.020 g / cm3, hardness 70 + 5 Shore A, breaking load 8 MPa minimum, elongation at break 250% minimum, tear strength 15 kN/m minimum, compression set sch. 25% at 175 ° C 40% maximum, thermal expansion coefficient of 5-6%. These values are not considered in any case to be binding or limiting.

Experimental tests carried out by the Applicant with the compounds mentioned above have shown the absence of contamination by the silicone rubber that constitutes the removable inserts with regard to both the fresh composite as well as the polymerized one, even under more severe conditions than those of use.

According to an embodiment alternative to the one described and shown above, the panel may be assembled as follows:
- the uncured skin panel 11 is arranged on the bottom plate 15;
- on the face 12 of the skin panel 11 facing upwards a series of inserts 40 is then laid down, conveniently arranged in parallel fashion, spaced apart one from the other as needed; the flat surfaces 42 of the inserts are placed against the face 12 of the skin panel; the convex surfaces 41 of the inserts are facing upwards;
- on each insert 40 a respective stringer 13 is placed, applying the concave portion 15 of the stringer on the congruent convex surface 41 of the insert; the flanges 16, 17 of the insert are applied against the face 12 of the skin panel.

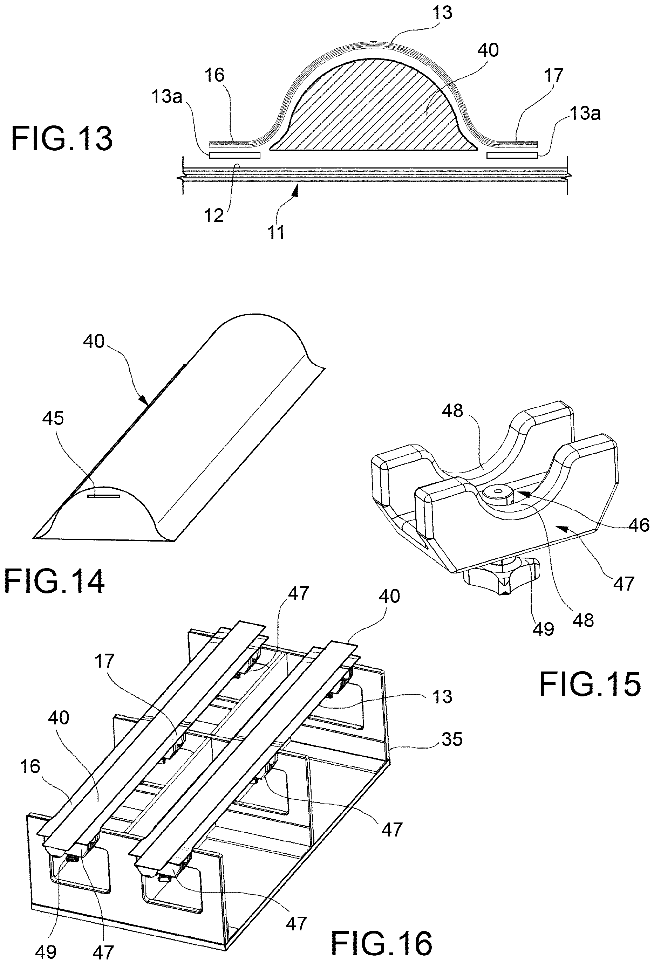

Another alternative embodiment of this method differs from the one described above due to the possibility of using a pre-cured skin panel 11 (instead of a polymerizable panel). According to this other embodiment (Figure 13) strips of structural adhesive 13a for high temperatures are placed between the pre-cured panel 11 and the stringers 13, particularly between the flanges 16, 17 and the face 12 of the skin panel 11. Applying temperature and pressure in the autoclave thus causes the polymerization of the composite material constituting the stringers, the simultaneous polymerization of the structural adhesive and then the co-bonding of the reinforced panel comprising the skin panel 11 and a plurality of stringers 13 and applied rigidly and integrally to the face 12 of the skin panel.

According to another embodiment of the method, magnetic retaining means may be provided, associated with the inserts 40 and cooperating with the female tool 30 in order to prevent the detachment of the stringer/insert assembly from the female tool 30 during the overturning operation of the tool 30. It is desired to prevent the stringers and the inserts from falling out during the overturning movement that is performed to place the stringers on the skin panel.

One or more ferromagnetic elements 45 (Figure 14) may be incorporated in each insert 40, for example in the shape of longitudinally elongated slats or discreet bodies (for example plates or disks) distributed longitudinally along the insert, adapted to cooperate with a plurality of magnets 46 (Figure 15) distributed along the female tool in the vicinity of the grooves 32.

The magnets 46, for example neodymium magnets, may be mounted on supports 47 having one or more concave surfaces 48 with a contour congruent to the transverse contour of one of the grooves 32.

The supports 47 are attachable to the female tool 30 spaced apart longitudinally (Figure 16).

The ferromagnetic elements 45 may advantageously be located in proximity to a central portion of the convex surface 41.

Preferably, the magnets 46 are mechanically removable from the supports 47 by means of releasable fastening elements, for example by a screw, in this example controllable by a knob 49. Alternately, the magnets 46 may be electrically activated and deactivated. In fact, after the overturning step of the female tool 30, in which the stringers 13 with inserts 40 are applied on the skin panel 11, it is preferable for the magnets to be deactivated or removed in order to release the stringer/insert assembly.

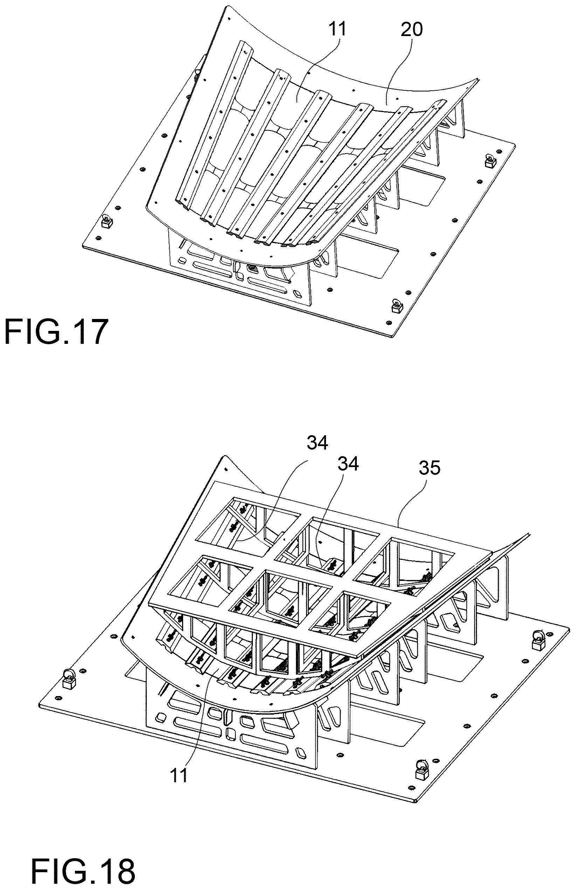

In figures 17 and 18, an exemplary embodiment is shown in which a curved skin panel 11 is fastened on a curved surface 20 of a forming mold. In this example, the skin panel 11 and the surface 20 of the mold are concave. The female tool 30 features an array of elongated forming elements 34, each defining a groove 32 and supported by a rotatable handling structure 35 for retaining the stringers 13 and the inserts 40 and placing them on the skin panel 11.

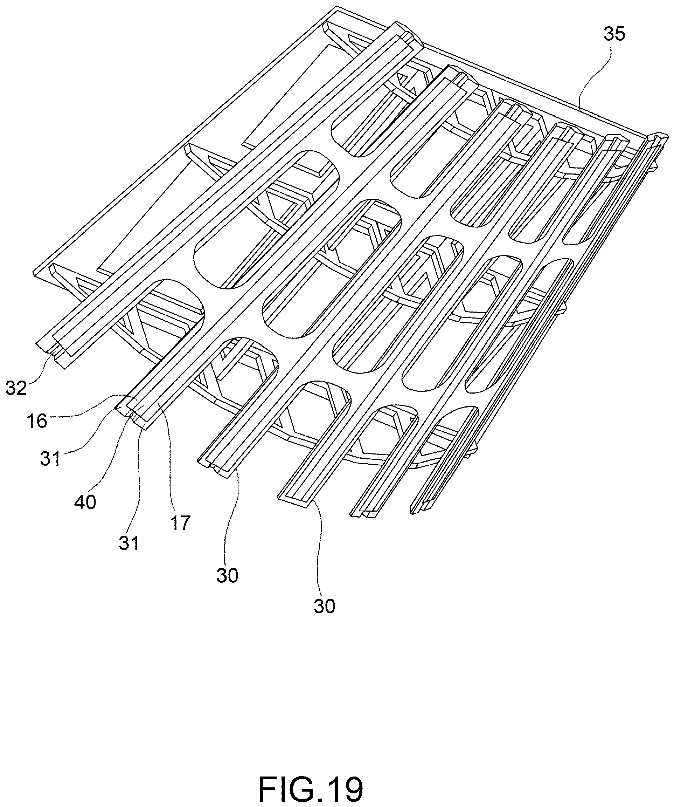

Figure 19 illustrates a rotatable handling structure 35 capable of holding the female tools 30, and therefore the stringers 13 and the related inserts 40, according to a convex curved surface, so as to support the stringers and the inserts on a panel skin (not shown) of corresponding convex shape.

To simplify, the compacting vacuum bag, in the case of panels with many stringers or with a pronounced curvature, it is necessary to provide for the dismounting and removal of the rotatable handling element 35 to which the various female tools 30 are joined.

Although some embodiments of the method have been described, various modifications may be made, without departing from the scope of the invention, as defined in the appended claims. For example, the skin panel may be either flat or curved. It is also understood that the number of stringers applied to the same skin portion, their spacing and their dimensions may vary based on need. The stringers may also be parallel or in a straight line.

## Claims

1. A method of manufacturing reinforced panels (10) of composite material, comprising a skin panel (11) and a plurality of longitudinally elongated stringers (13) rigidly and integrally applied to one face (12) of the skin panel (11), the method comprising the following steps:
a1) providing a plurality of stringers (13) of thermosetting fiber-reinforced polymerizable composite material, each stringer having a cross section with a concave portion (15) and two opposite lateral flanges (16, 17);
a2) providing a skin panel (11) of fiber-reinforced thermosetting composite polymerizable or polymerized material;
a3) providing a plurality of longitudinally elongated inserts (40) having a solid or not hollow cross-section with a convex surface (41) substantially congruent with the concave portion (15) of the stringer (13) and a substantially flat surface (42), wherein the material of the inserts has coefficients of expansion and of thermal shrinkage higher than coefficients of expansion and thermal shrinkage of the thermosetting composite material;
b) assembling the panel (10) by placing the flanges (16, 17) of each stringer (13) against a face (12) of the skin panel (11), with a respective insert (40) interposed between the concave portion (15) and the face (12) of the skin panel (11), in such a way that the stringer (13) and the face (12) of the skin panel together define a respective plurality of elongate cavities (14) having a closed loop cross-section which receive the inserts and are congruent thereto;
c) covering the panel (10) with a curing vacuum bag (22) and applying vacuum to the bag;
d) applying heat and pressure to the panel (10) in an autoclave so as to cure the polymerizable composite material, in such a way that each insert (40) undergoes a controlled thermal expansion and exerts a pressure against inner walls of the cavity (14) in which it is received, which pressure reacts to a compressive action resulting from the external pressure of the autoclave and the vacuum applied to the bag (18), resulting in compaction of the stringers (13);
e) allowing the inserts (40) to cool down, whereby the inserts undergo a thermal shrinkage of higher magnitude than the thermal shrinkage undergone by the cured panel (10);
f) removing the inserts out of the cavities (14);
**characterized in that**
the longitudinally elongated inserts (40) are made of rubber material having coefficients of expansion and of thermal shrinkage higher than coefficients of expansion and thermal shrinkage of the thermosetting composite material, and that
in step f), the longitudinally elongated inserts (40) are removed by extracting the inserts longitudinally out of the cavities (14).

2. A method according to claim 1, wherein
in step a2), the skin panel (11) is of thermosetting composite fiber-reinforced polymerizable material; and
in step d), the application of temperature and pressure in the autoclave causes the skin panel (11) and stringers (13) to co-cure and integrally join together.

3. A method according to claim 1, wherein
in step a2), the skin panel (11) is a pre-cured panel of thermosetting fiber-reinforced polymerized composite material;
step a3) is followed by the step of interposing a structural adhesive (13a) between the pre-cured panel (11) and the stringers (13); and
in step d), the application of temperature and pressure in the autoclave causes the stringers (13) to cure and the polymerization of the structural adhesive (13a), so as integrally secure the stringers (13) to the skin panel (11).

4. A method according to any one of the preceding claims, wherein
step a1) comprises preparing of the plurality of stringers (13) of thermosetting fiber-reinforced polymerizable composite material in a female tool (30) having a plurality of elongated grooves (32), where the concave portions (15) of the stringers (13) are laid in the elongated grooves (32), and the lateral flanges (16, 17) of the stringers are laid on surfaces (31) of the female tool (30) adjacent to two opposite sides of each elongated groove (32);
the assembling step b) is preceded by the step of laying, in the concave portion (15) of each stringer (13), a respective insert (40), wherein a convex surface (41) of each insert is turned towards the groove (32), while a substantially flat surface (42) of each insert is approximately flush with the lateral flanges (16, 17) of the stringer;
the assembling step b) includes the step of turning over the female tool (30) with the stringers (13) and the inserts (40) accommodated in the stringers and then placing the stringers (13) above the skin panel (11), laying the flanges (16, 17) directly against the face (12) of the skin panel.

5. A method according to claim 4, wherein the female tool (30) and the inserts (40) are provided with releasable retaining means (45, 46) cooperating in a removable manner to retain each insert (40) housed in the respective stringer (13) during said overturning step.

6. A method according to claim 5, wherein the releasable retaining means (45, 46) comprise one or more ferromagnetic elements (45) distributed longitudinally along each insert (40), and a plurality of magnets (46) distributed along each female tool (30) in proximity of the grooves (32).

7. A method according to claim 6, wherein the magnets (46) are mechanically removable from the respective female tool (30) or are controlled electrically so as to be magnetically activated and deactivated.

8. A method according to claim 4, wherein step a1) comprises the step of forming the stringer (30) on the female tool (30) by laminating fiber-reinforced polymerizable thermosetting material which is positioned in the grooves (32), so as to copy the shape of the grooves, and on the surfaces (31) adjacent to the two opposite sides of each groove (32).

9. A method according to any one of the preceding claims, wherein the elongated insert (40) has a constant cross-section along its length.

10. A method according to any one of the preceding claims, wherein the elongated insert (40) is obtained by extrusion or by casting in a mold.

11. A method according to any one of the preceding claims, wherein the elongated insert (40) is made of silicone rubber having a rubber hardness of about 70 shore.

12. A method according to any one of the preceding claims, wherein the elongated insert (40) is made of silicone rubber of the polyvinyl-methyl-siloxane type (VMQ) belonging to group Q of siloxanes, and has one or more of the following characteristics:
- Specific weight 1.200 ± 0.020 g/cm³;
- 70 ± 5 Shore A hardness;
- breaking load 8 MPa (minimum);
- elongation at break 250% (minimum);
- tear strength 15 kN/m (minimum);
- compression set sch. 25% at 175°C 40% (maximum);
- thermal expansion coefficient 5-6%.

## Patentansprüche

1. Verfahren zum Herstellen von verstärkten Paneelen (10) aus Verbundwerkstoff, mit einem Hautpaneel (11) und einer Vielzahl von sich längs erstreckenden Stringern (13), die steif und integral auf eine Fläche (12) des Hautpaneels (11) aufgebracht sind, wobei das Verfahren die nachfolgenden Schritte aufweist:
a1) Bereitstellen einer Vielzahl von Stringern (13) aus einem duroplastischen faserverstärkten polymerisierbaren Verbundwerkstoff, wobei jeder Stringer einen Querschnitt mit einem konkaven Bereich (15) und zwei gegenüberliegenden lateralen Flanschen (16, 17) aufweist;
a2) Bereitstellen eines Hautpaneels (11) aus einem faserverstärkten duroplastischen polymerisierbaren oder polymerisierten Verbundwerkstoff;
a3) Bereitstellen einer Vielzahl von sich längs erstreckenden Einsätzen (40) mit einem massiven oder nicht-hohlen Querschnitt mit einer konvexen Oberfläche (41), die im Wesentlichen mit dem konkaven Bereich (15) der Stringer (13) kongruent ist, und einer im wesentlichen flachen Oberfläche (42), wobei das Material der Einsätze Ausdehnungs- und Wärmeschrumpfungskoeffizienten aufweist, die höher sind als die Ausdehnungs- und Wärmeschrumpfungskoeffizienten des duroplastischen Verbundwerkstoffs;
b) Zusammenbauen des Paneels (10) durch Platzieren der Flansche (16, 17) jedes Stringers (13) gegen eine Fläche (12) des Hautpaneels (11), wobei ein entsprechender Einsatz (40) zwischen dem konkaven Bereich (15) und der Fläche (12) des Hautpaneels (11) auf solch eine Art und Weise angeordnet ist, dass der Stringer (13) und die Fläche (12) des Hautpaneels zusammen eine entsprechende Vielzahl von langgestreckten Aussparungen (14) mit einem geschlossenen Loop-Querschnitt aufweisen, die die Einsätze aufnehmen und kongruent damit sind.
c) Abdecken des Paneels (10) mit einem Aushärtvakuumbeutel (22) und Aufbringen eines Vakuums auf den Beutel;
d) Aufbringen von Wärme und Druck auf das Paneel (10) in einem Autoklaven, so dass der polymerisierbare Verbundwerkstoff aushärtet, auf solch eine Art und Weise, dass jeder Einsatz (40) eine gesteuerte thermische Ausdehnung erfährt und einen Druck gegen Innenwände der Aussparung (14), in der er aufgenommen ist, ausübt, welcher Druck auf einen Kompressionsvorgang reagiert, der von dem Außendruck des Autoklaven und dem Vakuum resultiert, das auf den Beutel (18) aufgebracht wird, was zu einer Verdichtung der Stringer (13) führt;
e) Ermöglichen der Einsätze (40) abzukühlen, wodurch die Einsätze eine thermische Schrumpfung eines größeren Ausmaßes erfahren als die thermische Schrumpfung, die das ausgehärtete Paneel (10) erfährt;
f) Entfernen der Einsätze aus den Aussparungen (14);
**dadurch gekennzeichnet, dass**
die sich längs erstreckenden Einsätze (40) aus einem Gummimaterial hergestellt sind, das höhere Ausdehnungs- und Wärmeschrumpfungskoeffizienten aufweist als die Ausdehnungs- und Wärmeschrumpfungskoeffizienten des duroplastischen Verbundwerkstoffs, und dass
in Schritt f) die sich längs erstreckenden Einsätze (40) durch Herausziehen der Einsätze der Länge nach aus den Aussparungen (14) heraus entfernt werden.

2. Verfahren nach Anspruch 1, bei dem
in Schritt a2) das Hautpaneel (11) aus einem duroplastischen faserverstärkten polymerisierbaren Verbundwerkstoff ist; und
in Schritt d) das Aufbringen von Temperatur und Druck in dem Autoklaven das Hautpaneel (11) und die Stringer (13) veranlasst, gleichzeitig auszuhärten und sich integral miteinander zu verbinden.

3. Verfahren nach Anspruch 1, bei dem
in Schritt a2) das Hautpaneel (11) ein vorgehärtetes Paneel aus einem duroplastischen faserverstärkten polymerisierten Verbundwerkstoff ist;
Schritt a3) der Schritt des Einbringens eines Strukturklebers (13a) zwischen das vorgehärtete Paneel (11) und die Stringer (13) folgt;
in Schritt d) das Aufbringen von Temperatur und Druck in dem Autoklaven die Stringer (13) veranlasst auszuhärten und die Polymerisierung des Strukturklebers (13a) bewirkt, so dass die Stringer (13) integral an dem Hautpaneel (11) befestigt sind.

4. Verfahren nach einem der vorhergehenden Ansprüche, bei dem
Schritt a1) das Vorbereiten der Vielzahl von Stringern (13) aus thermoplastischem faserverstärkten polymerisierbaren Verbundwerkstoff in einem aufnehmenden Werkzeug (30) mit einer Vielzahl von langgestreckten Nuten (32) aufweist, wo die konkaven Bereiche (15) der Stringer (13) in die langgestreckten Nuten (32) gelegt werden und die lateralen Flansche (16, 17) der Stringer auf Oberflächen (31) des aufnehmenden Werkzeugs (30) an zwei gegenüberliegende Seiten jeder langgestreckten Nut (32) angrenzend gelegt werden;
dem Zusammenbauschritt b) der Schritt des Einlegens eines entsprechenden Einsatzes (40) in den konkaven Bereich (15) jedes Stringers (13) vorangeht, bei dem eine konvexe Oberfläche (41) jedes Einsatzes in Richtung der Nut (32) gedreht wird, während eine im Wesentlichen flache Oberfläche (42) jedes Einsatzes mit den lateralen Flanschen (16,17) der Stringer in etwa bündig ist;
der Zusammenbauschritt b) den Schritt des Umdrehens des aufnehmenden Werkzeugs (30) mit den Stringern (13) und den Einsätzen (40), die in den Stringern aufgenommen sind, und dann des Platzierens der Stringer (13) über dem Hautpaneel (11), was die Flansche (16, 17) direkt gegen die Fläche (12) des Hautpaneels legt, aufweist.

5. Verfahren nach Anspruch 4, bei dem das aufnehmende Werkzeug (30) und die Einsätze (40) mit lösbaren Haltemitteln (45, 46), die auf eine lösbare Art und Weise zum Halten jedes Einsatzes (40) zusammenwirken, der in dem entsprechenden Stringer (13) untergebracht ist, während des Umdreh-Schritts versehen sind.

6. Verfahren nach Anspruch 5, bei dem die lösbaren Haltemittel (45, 46) ein oder mehrere ferromagnetische Elemente (45) aufweist, die entlang jedes Einsatzes (40) verteilt sind, und eine Vielzahl von Magneten (46) aufweist, die entlang jedes aufnehmenden Werkzeugs (30) in der Nähe der Nuten (32) verteilt sind.

7. Verfahren nach Anspruch 6, bei dem die Magnete (46) von dem entsprechenden aufnehmenden Werkzeug (30) mechanisch lösbar sind oder derart elektrisch gesteuert sind, dass sie magnetisch zu aktivieren und deaktivieren sind.

8. Verfahren nach Anspruch 4, bei dem Schritt a1) den Schritt des Formens des Stringers (30) auf dem aufnehmenden Werkzeug (30) durch Laminieren eines faserverstärkten polymerisierbaren duroplastischen Materials, das in den Nuten (32) positioniert wird, so dass die Form der Nuten kopiert wird, und auf den Oberflächen (31) positioniert wird, an die die zwei gegenüberliegenden Seiten jeder Nut (32) angrenzen, aufweist.

9. Verfahren nach einem der vorhergehenden Ansprüche, bei dem der lang gestreckte Einsatz (40) einen konstanten Querschnitt entlang seiner Länge aufweist.

10. Verfahren nach einem der vorhergehenden Ansprüche, bei dem der langgestreckte Einsatz (40) durch Extrudieren oder durch Gießen in eine Form erhalten wird.

11. Verfahren nach einem der vorhergehenden Ansprüche, bei dem der langgestreckte Einsatz (40) aus einem Silikongummi mit einer Gummihärte von etwa 70 Shore hergestellt ist.

12. Verfahren nach einem der vorhergehenden Ansprüche, wobei der langgestreckte Einsatz (40) aus einem Silikongummi eines Polyvinyl-Methyl-Siloxan-Typs (VMQ) hergestellt ist, der zu der Gruppe Q der Siloxane gehört, und eine oder mehrere der nachfolgenden Eigenschaften aufweist:
- Spezifisches Gewicht 1,200 + 0,020 g/cm³;
- 70 + 5 Shore-A Härte;
- Bruchlast 8 MPa (minimal);
- Längung bei Bruch 250 % (minimal);
- Reißfestigkeit 15 kN/m (minimal);
- Solldruckverformungsrest 25 % bei 175°C 40 % (maximal);
- Wärmeausdehnungskoeffizient 5-6 %.

## Revendications

1. Procédé de fabrication de panneaux (10) renforcés de matériau composite, comprenant un panneau de revêtement (11) et une pluralité de longerons (13) longitudinalement allongés appliqués de manière rigide et intégrale à une face (12) du panneau de revêtement (11), le procédé comprenant les étapes suivantes :
a1) la fourniture d'une pluralité de longerons (13) de matériau composite polymérisable renforcé de fibres thermodurcissable, chaque longeron ayant une section transversale avec une portion concave (15) et deux brides (16, 17) latérales opposées ;
a2) la fourniture d'un panneau de revêtement (11) de matériau polymérisé ou polymérisable composite thermodurcissable renforcé de fibres ;
a3) la fourniture d'une pluralité d'inserts (40) longitudinalement allongés ayant une section transversale solide ou non creuse avec une surface convexe (41) sensiblement en harmonie avec la portion concave (15) du longeron (13) et une surface sensiblement plate (42), dans lequel le matériau des inserts présente des coefficients d'expansion et de contraction thermique supérieurs à des coefficients d'expansion et de contraction thermique du matériau composite thermodurcissable ;
b) l'assemblage du panneau (10) en plaçant les brides (16, 17) de chaque longeron (13) contre une face (12) du panneau de revêtement (11), avec un insert (40) respectif interposé entre la portion concave (15) et la face (12) du panneau de revêtement (11), d'une manière telle que le longeron (13) et la face (12) du panneau de revêtement définissent ensemble une pluralité respective de cavités (14) allongées ayant une section transversale à boucle fermée qui reçoivent les inserts et sont en harmonie avec ceux-ci ;
c) le recouvrement du panneau (10) avec une poche à vide de durcissement (22) et l'application de vide à la poche ;
d) l'application de chaleur et de pression au panneau (10) dans un autoclave de manière à faire durcir le matériau composite polymérisable, d'une manière telle que chaque insert (40) subit une expansion thermique commandée et exerce une pression contre des parois intérieures de la cavité (14) dans laquelle il est reçu, laquelle pression réagit à une action de compression résultant de la pression externe de l'autoclave et du vide appliqué à la poche (18), résultant dans le compactage des longerons (13) ;
e) le fait de laisser les inserts (40) refroidir, moyennant quoi les inserts subissent une contraction thermique d'amplitude plus élevée que la contraction thermique subie par le panneau durci (10) ;
f) le retrait des inserts des cavités (14) ;
**caractérisé en ce que**
les inserts (40) longitudinalement allongés sont composés de matériau caoutchouteux ayant des coefficients d'expansion et de contraction thermique supérieurs à des coefficients d'expansion et de contraction thermique du matériau composite thermodurcissable, et ce que
à l'étape f), les inserts longitudinalement allongés (40) sont retirés en extrayant les inserts longitudinalement des cavités (14).

2. Procédé selon la revendication 1, dans lequel
à l'étape a2), le panneau de revêtement (11) est de matériau polymérisable composite thermodurcissable renforcé de fibres ; et
à l'étape d), l'application de température et de pression dans l'autoclave amène le panneau de revêtement (11) et les longerons (13) à co-durcir et à se joindre ensemble d'un seul tenant.

3. Procédé selon la revendication 1, dans lequel
à l'étape a2), le panneau de revêtement (11) est un panneau pré-durci de matériau polymérisable composite thermodurcissable renforcé de fibres ;
l'étape a3) est suivie de l'étape d'interposition d'un adhésif structural (13a) entre le panneau pré-durci (11) et les longerons (13) ; et
à l'étape d), l'application de température et de pression dans l'autoclave amène les longerons (13) à durcir et la polymérisation de l'adhésif structural (13a), de manière à fixer les longerons (13) au panneau de revêtement (11) d'un seul tenant.

4. Procédé selon l'une quelconque des revendications précédentes, dans lequel
l'étape a1) comprend la préparation de la pluralité de longerons (13) de matériau composite polymérisable thermodurcissable renforcé de fibres dans un outil femelle (30) ayant une pluralité de rainures allongées (32), où les portions concaves (15) des longerons (13) sont disposées dans les rainures allongées (32), et les brides (16, 17) latérales des longerons sont disposés sur des surfaces (31) de l'outil femelle (30) de manière adjacente à deux côtés opposés de chaque rainure allongée (32) ;
l'étape d'assemblage b) est précédée de l'étape de disposition, dans la portion concave (15) de chaque longeron (13), d'un insert (40) respectif, dans laquelle une surface convexe (41) de chaque insert est tournée vers la rainure (32), alors qu'une surface sensiblement plate (42) de chaque insert est approximativement au même niveau que les brides (16, 17) latérales du longeron ;
l'étape d'assemblage (b) inclut l'étape de retournement de l'outil femelle (30) avec les longerons (13) et les inserts (40) accueillis dans les longerons puis de mise en place des longerons (13) au-dessus du panneau de revêtement (11), disposant les brides (16, 17) directement contre la face (12) du panneau de revêtement.

5. Procédé selon la revendication 4, dans lequel l'outil femelle (30) et les inserts (40) sont pourvus de moyens de retenue amovibles (45, 46) coopérant de manière amovible pour retenir chaque insert (40) logé dans le longeron respectif (13) durant ladite étape de retournement.

6. Procédé selon la revendication 5, dans lequel les moyens de retenue amovibles (45, 46) comprennent un ou plusieurs éléments ferromagnétiques (45) répartis longitudinalement le long de chaque insert (40), et une pluralité d'aimants (46) répartis le long de chaque outil femelle (30) à proximité des rainures (32).

7. Procédé selon la revendication 6, dans lequel les aimants (46) peuvent être mécaniquement retirés de l'outil femelle (30) respectif ou sont commandés électriquement de manière à être magnétiquement activés et désactivés.

8. Procédé selon la revendication 4, dans lequel l'étape a1) comprend l'étape de formation du longeron (30) sur l'outil femelle (30) en laminant un matériau thermodurcissable polymérisable renforcé de fibres qui est positionné dans les rainures (32), de manière à copier la forme des rainures, et sur les surfaces (31) adjacentes aux deux côtés opposés de chaque rainure (32).

9. Procédé selon l'une quelconque des revendications précédentes, dans lequel l'insert (40) allongé présente une section transversale constante sur sa longueur.

10. Procédé selon l'une quelconque des revendications précédentes, dans lequel l'insert (40) allongé est obtenu par extrusion ou par coulée dans un moule.

11. Procédé selon l'une quelconque des revendications précédentes, dans lequel l'insert (40) allongé se compose de caoutchouc de silicone ayant une dureté de caoutchouc d'environ 70 shore.

12. Procédé selon l'une quelconque des revendications précédentes, dans lequel l'insert (40) allongé se compose de caoutchouc de silicone du type polyvinyle-méthyle-siloxane (VMQ) appartenant au groupe Q de siloxanes, et présente une ou plusieurs des caractéristiques suivantes :
- poids spécifique 1,200 ± 0,020 g/cm³ ;
- dureté de 70 ± 5 Shore A ;
- charge de rupture 8 MPa (minimum) ;
- allongement à la rupture 250 % minimum) ;
- résistance à la déchirure 15 kN/m (minimum) ;
- déformation rémanente à la compression sch. 25 % à 175 °C 40 % (maximum) ;
- coefficient d'expansion thermique 5-6 %.
